# EUROPEAN PATENT APPLICATION

(11) **EP 1 211 862 A2**
(43) Date of publication of application: **05.06.2002**
(21) Application number: 01122141.3
(22) Date of filing: 14.09.2001
(51) Int. Cl.: H04L 29/06

(54) **Electronic commerce system for using secure user certification**

(30) Priority: 04.12.2000 JP 2000372925
(71) Applicant: Hitachi, Ltd., Chiyoda-ku, Tokyo 101-8010 (JP)
(72) Inventor: Akutsu, Takeshi, Hitachi, Ltd., Int. Prop. Group, Chiyoda-ku, Tokyo 100-8220 (JP); Morita, Akira, Hitachi, Ltd., Int. Prop. Group, Chiyoda-ku, Tokyo 100-8220 (JP); Takemoto, Satoshi, Hitachi, Ltd., Int. Prop. Group, Chiyoda-ku, Tokyo 100-8220 (JP); Kawatsura,Yoshiaki, Hitachi,Ltd., Int. Prop. Group, Chiyoda-ku, Tokyo 100-8220 (JP); Chiba, Hiroyuki, Hitachi, Ltd., Int. Prop. Group, Chiyoda-ku, Tokyo 100-8220 (JP); Watanabe, Kiyoshi, Hitachi, Ltd., Int. Prop. Group, Chiyoda-ku, Tokyo 100-8220 (JP); Narishima,Yoshitaka, Hitachi,Ltd, Int. Prop. Group, Chiyoda-ku, Tokyo 100-8220 (JP)
(74) Representative: Strehl Schübel-Hopf & Partner

(57) **Abstract**

Techniques that allow trust evaluation institutions to share trust information of members (users) belonging to different trust evaluation institutions. A member registered at one trust evaluation institution can carry out a transaction with a member registered at another trust evaluation institution even if the trust evaluation institutions use different techniques, methods, procedures, or standards for evaluating trust information for their members.

## Description

### BACKGROUND OF THE INVENTION

The present invention relates to techniques for authenticating and/or certifying users involved in electronic commerce activities. More specifically, the present invention provides techniques for authenticating and/or certifying the users based upon trust information issued by multiple trust evaluation institutions and associated with the users.

Recent years have seen a tremendous growth in the number of electronic commerce sites that may include Internet transaction sites, auction sites, and the like. However, providing secure transactions using these electronic commerce sites requires identity verification of users involved in a transaction (also referred to as "transaction partners") and confirmation of the reliability of the transaction partners, i.e., confirmation of whether each transaction partner can be trusted or not.

Presently, a number of electronic commerce sites (e.g., Internet transaction sites and auction sites) implement transactions within a site by setting up a trust evaluation institution and providing members of the site with trust information generated by the trust evaluation institution based on site members' past transactions and the like. The trust information provided to or associated with a member may indicate a level of reliability, credibility, authenticity, identity, etc. of the member. For example, trust information may indicate the member's level of reliability and worthiness for participating in a transaction. However, the trust information issued by conventional trust evaluation institutions associated with a site can only be for transactions between members belonging to the same site.

Further, conventional trust evaluation institutions associated with some of the sites generate trust information using evaluation methods that are unique to the sites, with members (users) being evaluated according to independent evaluation standards. As a result an evaluation technique or standard used by one trust evaluation institution may be different and incompatible with an evaluation technique used by another trust evaluation institution. As a result, with conventional systems, the secure sharing of trust information between multiple sites engaged in electronic commerce is difficult, if not impossible. For example, if a first user, who is a member of a first site serviced by a first trust evaluation institution desires a transaction with a second user who is a member of a second site serviced by a second trust evaluation institution, the trust information accumulated at the first site by the first user cannot be used at the second site. As a result, the first user cannot enter into a transaction with the second user resulting in possibly lost transaction opportunities for the first user and the second user.

In light of the above, there is a need for techniques which allow users to enter into electronic transactions irrespective of the trust evaluation institutions which provide trust information for the users.

### SUMMARY OF THE INVENTION

The present invention provides techniques that allow trust evaluation institutions to share trust information of members (users) belonging to different trust evaluation institutions. More specifically, according to an embodiment of the present invention, if a member registered at one trust evaluation institution is to carry out a transaction with a member registered at another trust evaluation institution, the trust information of the transaction partner assigned by the other trust evaluation institution can be used as a basis for trust with regard to the member's own trust evaluation institution.

According to an embodiment of the present invention, techniques are provided for providing a trust information certificate to a user in a network environment. In this embodiment, a system incorporating the present invention accesses history information for the user, the history information identifying past actions of the user. The system then generates trust information for the user based upon the history information, the trust information generated according to a first evaluation technique. A trust information certificate is generated for the user based upon the trust information generated for the user according to the first evaluation technique, and a trust information sharing certificate is generated comprising information for converting the trust information generated according to the first evaluation standard to trust information according to a second evaluation technique different from the first evaluation standard.

According to another embodiment of the present invention, a system incorporating the present invention receives a transaction request from a user, the transaction request comprising a first certificate and a second certificate, the first certificate comprising trust information for the user generated according to a first evaluation standard, the second certificate comprising attribute information for converting the trust information generated according to the first evaluation standard to trust information according to a second evaluation standard different from the first evaluation standard. The system converts the trust information included in the first certificate to trust information according to the second evaluation standard by using the attribute information included in the second certificate.

According to yet another embodiment of the present invention, an electronic commerce system is provided comprising a first server configured to provide services for a first plurality of members, the first plurality of members including a first member, and a second server configured to provide services for a second plurality of members, the second plurality of members including a second member. In this embodiment, the first member receives a transaction request from the second member. The transaction request comprises a first certificate and a second certificate. The first certificate comprises trust information for the second member generated by the second server according to a second evaluation standard, the trust information generated based upon the second member's activities. The second certificate comprises attribute information for converting the trust information generated according to the second evaluation standard to trust information according to a first evaluation used by the first server, the first evaluation standard different from the second evaluation standard.

According to another embodiment of the present invention, a memory is provided for storing data for access by an application program being executed in a data processing system. The memory comprises a first data structure stored in the memory, the first data structure used by the application program and comprising trust information for a user, the trust information generated according to a first evaluation procedure, the trust information indicating a certification level for the user for participating in commercial activities. The memory also comprises a second data structure stored in the memory, the second data structure used by the application program and comprising attributes information for converting the trust information generated according to the first evaluation procedure to trust information according to a second evaluation procedure different from the first evaluation procedure.

Various additional objects, features and advantages of the present invention can be more fully appreciated with reference to the detailed description and accompanying drawings that follow.

### BRIEF DESCRIPTION OF THE DRAWINGS

Fig. 1 is a simplified architecture diagram of a system for providing trust information to a community according to an embodiment of the present invention;
Fig. 2 is a simplified schematic diagram depicting operations performed by a community server and member clients to share trust information in a single community according to an embodiment of the present invention;
Fig. 3 is a simplified schematic diagram depicting operations performed to share trust information between two communities according to an embodiment of the present invention;
Fig. 4 is a simplified flowchart showing operations performed by a community server when issuing a trust information certificate according to an embodiment of the present invention;
Fig. 5 is a simplified flowchart showing the operations performed by community (A) of Fig. 3 when issuing a trust information sharing certificate to community (B) according to an embodiment of the present invention;
Fig. 6 is a simplified flowchart showing operations performed when a transaction takes place between a member client (a) of community (A) and a member client (b) of community (B) according to an embodiment of the present invention;
Fig. 7 depicts member registration information that may be stored in a database according to an embodiment of the present invention;
Fig. 8 depicts a data structure storing trust information certificate for a member and trust information sharing certificate received by a community server to which the member belongs according to an embodiment of the present invention;
Fig. 9 depicts information which may be included in a trust information certificate and which may be stored in a data structure according to an embodiment of the present invention;
Fig. 10 depicts information which may be included in a trust information sharing certificate and which may be stored in a data structure according to an embodiment of the present invention;
Fig. 11 shows mapping attributes for a first community and a second community which both express user trust quantitatively according to an embodiment of the present invention;
Fig. 12 shows mapping attributes for an embodiment where trust information is defined in terms of levels; and
Fig. 13 shows mapping attributes in an embodiment where a first community expresses trust evaluations by rank while a second community uses quantitative evaluations according to an embodiment of the present invention.

### DETAILED DESCRIPTION OF THE INVENTION

The present invention provides techniques that enable users to enter into transactions irrespective of the trust evaluation institutions that provide trust information for the users. An embodiment of the present invention is described in detail below in conjunction with the figures. The scope of the present invention, as recited in the claims, is not limited to the embodiment(s) described below. One of ordinary skill in the art would recognise other variations, modifications, and alternatives.

According to the present invention, trust evaluation institutions generate trust information for members of the trust evaluation institutions. A "member" of a trust evaluation institution refers to a party that uses trust information generated by the trust evaluation institution. A group of members using a trust evaluation institution and the trust information it generates is referred to as a "community." In a specific embodiment, a trust evaluation institution also serves as an institution that manages the community. In a network environment, a community may include a group of entities coupled to a network, where the entities include a server that performs functions of a trust evaluation institution and one or more user systems (or "member devices" or "member clients" e.g., users' personal computers or other information terminals) which are used by members of the community who use trust information generated by the trust evaluation institution. The server that manages the community (the "community server") can be the server of the trust evaluation institution (the "trust evaluation institution server") as well as the electronic commerce server, e.g., an electronic shopping mall server managing an electronic shopping mall.

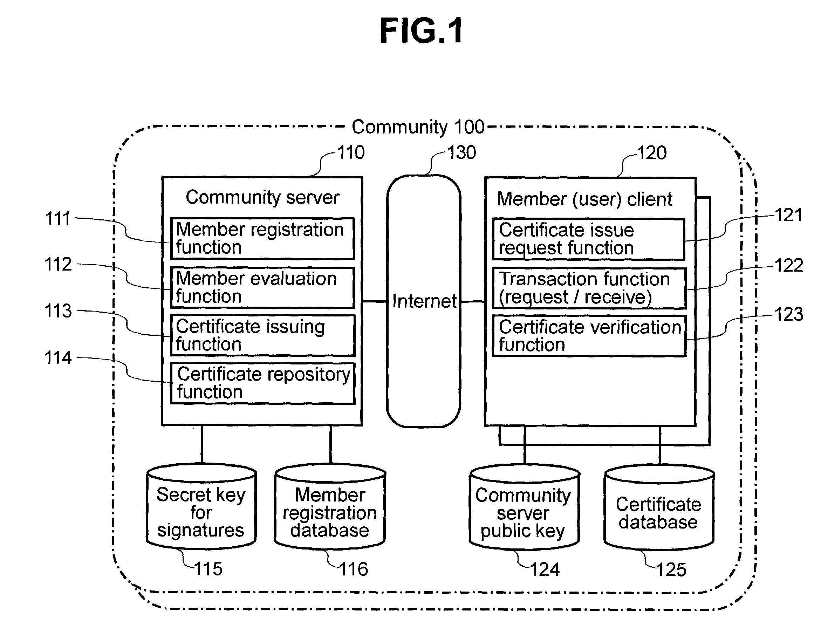

Fig. 1 is a simplified architecture diagram of a system for providing trust information for a community according to an embodiment of the present invention. The system depicted in Fig. 1 includes a community server 110 and one or more user or member client systems 120 (referred to as "member clients") coupled to a communication network 130. The system depicted in Fig. 1 is merely illustrative of an embodiment incorporating the present invention and does not limit the scope of the invention as recited in the claims. One of ordinary skill in the art would recognise other variations, modifications, and alternatives.

Communication network 130 provides a mechanism allowing the systems depicted in Fig. 1 to communicate and exchange information with each other. Communication network 130 may itself be comprised of many interconnected computer systems and communication links. While in one embodiment communication network 130 is the Internet, in other embodiments, communication network 130 may be any suitable computer network including a local area network (LAN), a wide area network (WAN), a wireless network, an intranet, a private network, a public network, a switched network, and the like.

Community server 110 is configured to manage information related to users who are members of the community serviced by server 110, to perform certificate issuing functions, and to provide other services to members of community 100. Member client systems 120 may be used by members belonging to community 100 to request and receive various services provided by server 110. According to an embodiment of the present invention, in community 100, member clients 120 are securely provided with a public key 124 (hereinafter referred to as a "Trusted Root") associated with a secret key 115 stored by community server 110 and used by server 110 for signatures. Clients 120 use public key 124 to authenticate community server 110. According to an embodiment of the present invention, member clients 120 authenticate a transaction partner using a certificate associated with public key 124 as the root of an authentication path (authentication chain). Further details related to the authentication path are provided below.

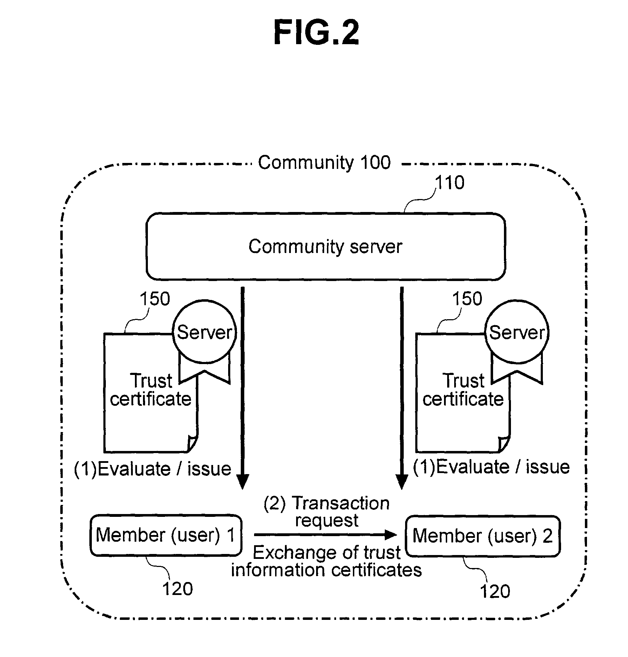

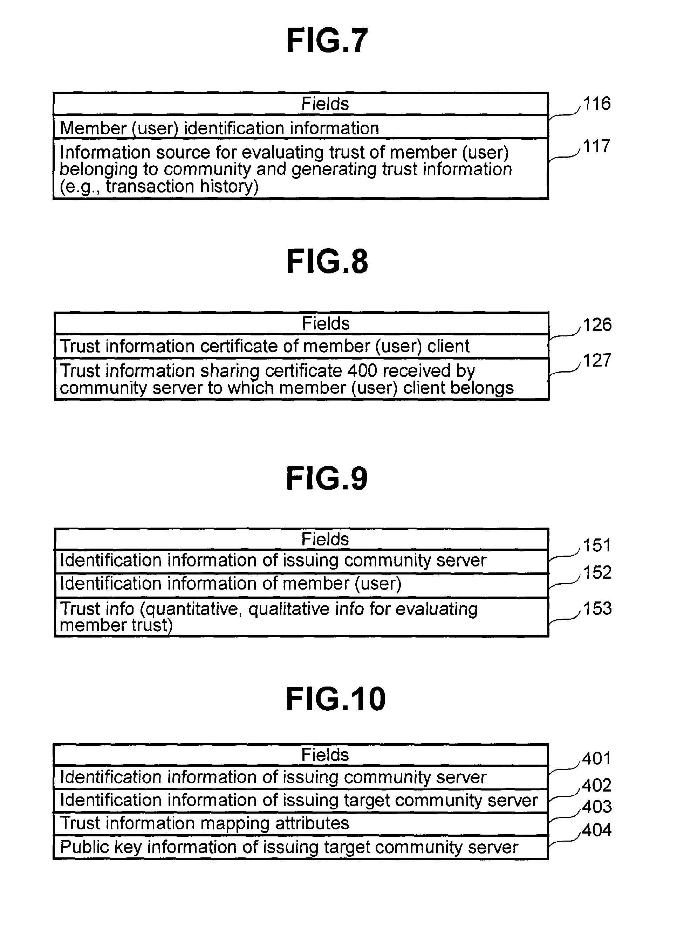

Fig. 2 is a simplified schematic diagram of the operations performed by a community server and member clients to share trust information in a single community according to an embodiment of the present invention. Community server 110 generates trust information for each of its members (users) based upon information about the member's past actions, and the like. Information related to the member's past actions (e.g. transaction history of the member) or information identifying sources which are to be used to determine the member's past activities may be stored in a data structure such as the data structure depicted in Fig. 7. As shown in Fig. 7, the information may include member identification information 116 and information source for evaluating the trust of the member 117.

The trust information may be formatted in the form of trust information certificates 150 may be digitally signed by server 110 using secret key 115 stored by server 110. The trust information certificate including the trust information is then communicated to member clients 120 used by the members of the community.

The trust information may be used by transaction partners during a transaction to evaluate each other's reliability. A transaction may refer to the sending and receiving of information such as transaction information, e.g., requests of agreements to buy or sell. Fig. 9 depicts information which may be included in a trust information certificate 150 and which may be stored in a data structure according to an embodiment of the present invention.

As depicted in Fig. 9, a trust information certificate 150 includes trust information 153 which indicates the trust level of the member of community 100. The trust information may indicate the member's credibility, authenticity, identity, and the like. Member client 120 presents this trust information certificate 150 to community server 110 in transactions within community 100, thereby allowing the member client to be evaluated by other member clients of community 100 involved in the transaction based upon trust information 153 included in trust information certificate 150 issued to the user or the member client providing the trust information certificate.

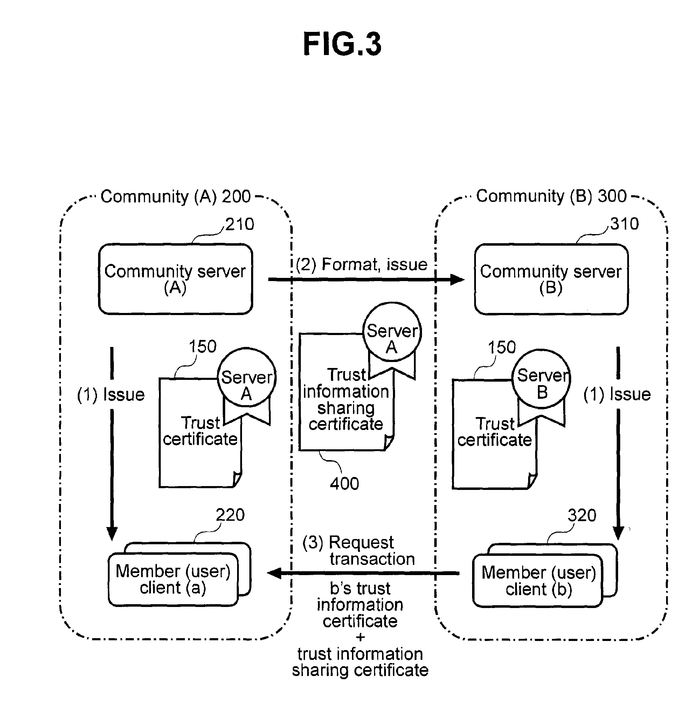

Fig. 3 is a simplified schematic diagram depicting operations performed to share trust information between two communities according to an embodiment of the present invention. For the sake of simplicity, it is assumed that a particular member of a community uses a particular member client. Accordingly, generating trust information for a particular member client system implies that the trust information is generated for the user of the particular member client system and who is a member of the community. This is not meant to limit the scope of the present invention as recited in the claims. In alternative embodiments, a member of a community may use more than one member client system.

In the embodiment depicted in Fig. 3, the trust information is shared between a community (A) 200 and a community (B) 300 that may use different evaluation standards or procedures for generating the trust information for their respective members. In the embodiment depicted in Fig. 3, community (A) 200 receives trust information assigned to a member client (b) 320 in community (B) 300.

As depicted in Fig. 3, a community server (A) 210 manages information related to community (A) 200, and is responsible for issuing a trust information certificate 150 to each member client (a) 220 belonging to the community (A) 200. Trust information certificates 150 may be signed by community server (A) 210 using secret key 115 stored by server (A). Likewise, a community server (B) 310 manages information related to community (B) and is responsible for issuing a trust information certificate 150 to each member client (b) 320 belonging to community (B) 300. Trust information certificates 150 issued by community server (B) 310 may be signed by community server (B) 310 using secret key 115 stored by server (B).

As depicted in Fig. 3, community server (A) 210 issues a trust information sharing certificate 400 that is communicated to community server (B) 310. According to the teachings of the present invention, trust information sharing certificate 400 comprises attribute information (hereinafter referred to as "trust information mapping attributes 403") that is used to normalise/balance/adjust the trust information evaluation methods/standards/techniques of community (A) and community (B). Community server (A) 210 also issues public key information of community server (B) 310. Trust information sharing certificate 400 may be digitally signed with the secret key 115 of community server (A) 210. Fig. 10 depicts information which may be included in a trust information sharing certificate 400 and which may be stored in a data structure according to an embodiment of the present invention.

To perform transactions in community (A), a member client (b) 320 belonging to community (B) 300 presents community (A) with its own trust information certificate 150 and the trust information sharing certificate 400 issued by community server (A) 210. According to an embodiment of the present invention, the trust information certificate 150 and the trust information sharing certificate 400 may be included in the transaction request sent by member client (b) 320 to community (A) 200. For example, the data structure depicted in Fig. 8 may represent a transaction request. As depicted in Fig. 8, the request may comprise trust information certificate of the member 126 and trust information sharing certificate 400 received by the community server to which the member belongs 127.

A member client (a) 220 belonging to community (A) 200 and with whom member client (b) 320 wants to enter into a transaction receives the transaction request from member client (b) 320. Client (a) 220 belonging to community (A) 200 then evaluates the trust level of member client (b) 320 requesting the transaction based upon the trust information 153 included in trust information certificate 150 provided by member client (b) 320 and based upon trust information mapping attributes 403 included in the trust information sharing certificate 400 presented by member client (b) 320. The requested transaction is performed based on the results of this evaluation.

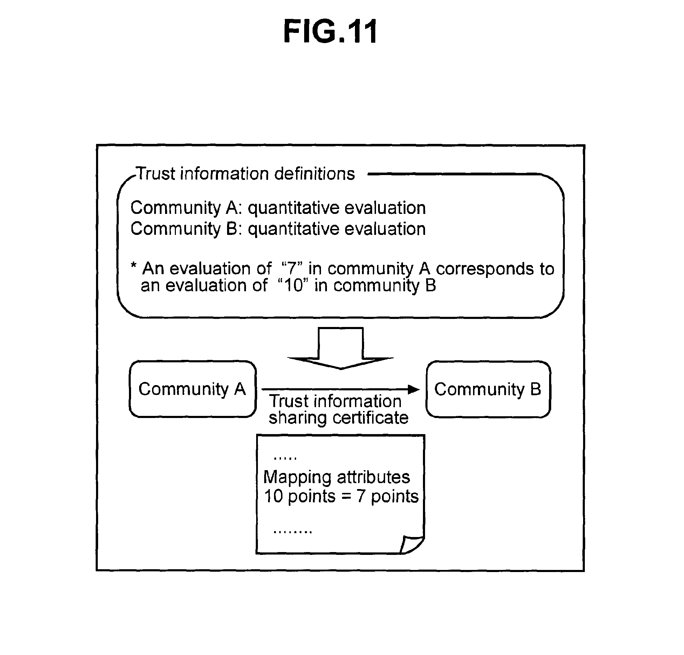

According to an embodiment of the present invention, the trust information mapping attributes 403 comprise information that includes formulas for converting trust information generated using one set of standards (e.g. standards used by community server (B)) to trust information based on another set of standards (e.g. standards used by community server (A)), thus allowing comparisons to be made between the trust information levels. Figs. 11, 12, and 13 illustrate specific examples of trust information mapping attributes that may be included in trust information sharing certificates issued between community (A) 200 and community (B) 300.

Fig. 11 shows mapping attributes for an embodiment where community (A) 200 and community (B) 300 both express user trust levels quantitatively. For example, a trust level evaluation of "7" in community (A) may correspond to a trust level evaluation of "10" in community (B). In this case, the trust information mapping attributes may comprise information including a formula specifying that "10 points=7 points" (as shown in Fig. 11).

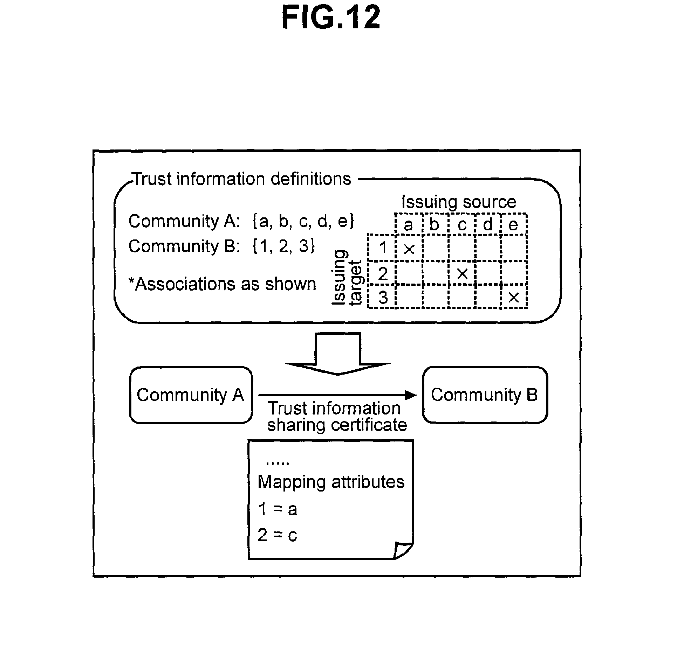

Fig. 12 shows mapping attributes for an embodiment where trust information is defined in terms of levels or grades. For example, in community (A) 200, users are evaluated by a rank of "a," "b," "c," "d," or "e" based on their past activities, and the like. In community (B) 300, users are evaluated by a rank of "1," "2," or "3" based on their past activities, and the like. In this embodiment, the mapping attributes included in the trust information sharing certificate issued for the two communities may contain formulas such as "1=a", "2=c", "3=e". The information may also be specified in the form of a table as depicted in Fig. 12.

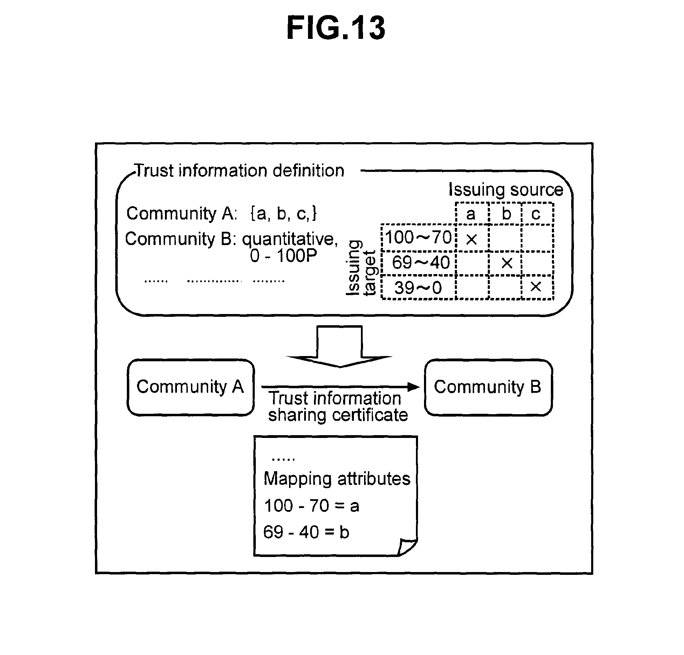

Fig. 13 shows mapping attributes in an embodiment where community (A) 200 expresses evaluations by rank as in Fig. 12, and community (B) 300 uses quantitative evaluations. In this embodiment, the trust information mapping attributes may contain formulas such as "100 ~ 70 = a", "69 ~ 40 = b", and "39 ~ 0 = c".

In the examples described above, community (A) 200 and community (B) 300 express trust information in terms of points (quantitative evaluations) or in terms of ranks. However, the scope of the present invention is not limited to these forms of expressing trust information. Various other forms and formats of trust information may also be used. Further, the examples of trust information mapping attributes described above present examples of "formulas" used to convert trust information generated according to certain evaluation standards/procedures into trust information generated according to different evaluation standards/procedures. However, the examples do not limit the types of formulas that may be used according to the teachings of the present invention. The formulas are determined individually by the communities when generating trust information based upon differences in examination methods and evaluation results. The "formulas" determined in this manner are the trust information mapping attributes, and these are indicated by the trust information sharing certificates.

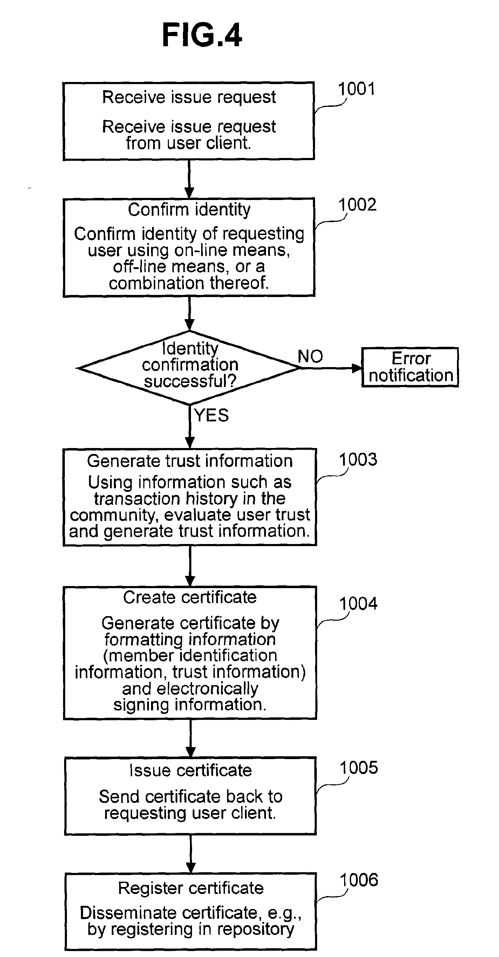

Fig. 4 is a simplified flowchart showing operations performed by a community server (e.g. community server 110 depicted in Fig. 2) when issuing a trust information certificate 150 according to an embodiment of the present invention. The flowchart depicted in Fig. 4 is merely illustrative of an embodiment incorporating the present invention and does not limit the scope of the invention as recited in the claims. One of ordinary skill in the art would recognise other variations, modifications, and alternatives.

As depicted in Fig. 4, processing is initiated when community server 110 receives a request to issue a certificate from a member client 120 belonging to the community serviced by community server 110 (step 1001). Community server 110 then verifies the identity of the member sending the request (step 1002). The verification may be performed using off-line techniques, on-line techniques, or by using a combination thereof. After successful identity verification, community server 110 evaluates the member's trust based on information such as the member's transaction history in the community, and generates trust information based upon the evaluation (step 1003). Next, a trust information certificate 150 is generated for the user (step 1004). As shown in Fig. 9, the trust information certificate 150 may include the issuing community server's identification information 151, the requesting member's identification information 152, and trust information 153 calculated for the requesting user/member. The information may be digitally signed by community server 110 in step 1004 using secret key 115.

The community server then sends the generated trust information certificate 150 to member client 120 from whom the request for the certificate was received in step 1001 (step 1005) and/or registers the certificate in a repository or the like to allow the certificate to be widely disseminated to other member clients 120 in community 100 (step 1006).

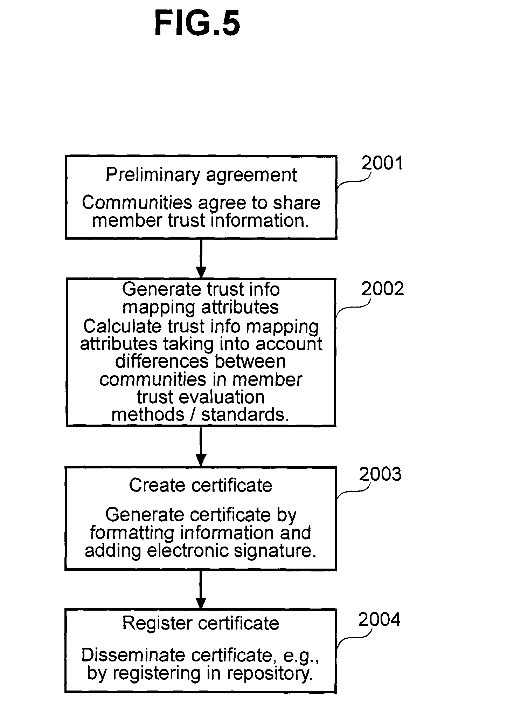

Fig. 5 is a simplified flowchart showing the operations performed by community (A) (depicted in Fig. 3) when issuing a trust information sharing certificate to community (B) 300 according to an embodiment of the present invention. The flowchart depicted in Fig. 5 is merely illustrative of an embodiment incorporating the present invention and does not limit the scope of the invention as recited in the claims. One of ordinary skill in the art would recognise other variations, modifications, and alternatives.

As depicted in Fig. 5, communities (A) and (B) enter into a preliminary agreement whereby communities (A) and (B) agree to share member trust information (step 2001). For example, community server (A) 210 and community server (B) 310 agree to allow trust information of member clients (b) 320 from community (B) to be received by community (A) 200. Next, the differences between the evaluation methods/standards of community (A) and community (B) are considered, and trust information mapping attributes 403 are calculated or generated (step 2002). Community server (A) 210 then generates a trust information sharing certificate 400 by formatting the attributes information (step 2003). As depicted in Fig. 10, the trust information sharing certificate information may comprise information 401 identifying the issuing community server (i.e. community server (A) 210 in this case), identification information 402 of the target community server (i.e. community server (B) 310 in this case), trust information mapping attributes 403, and public key information 404 of the target community server (i.e. public key information of community server (B) 310 in this case). As part of step 2003, community server (A) 210 may also digitally sign the certificate information using its secret key 115. Finally, the generated trust information sharing certificate 400 is registered in a repository as needed and made available (step 2004).

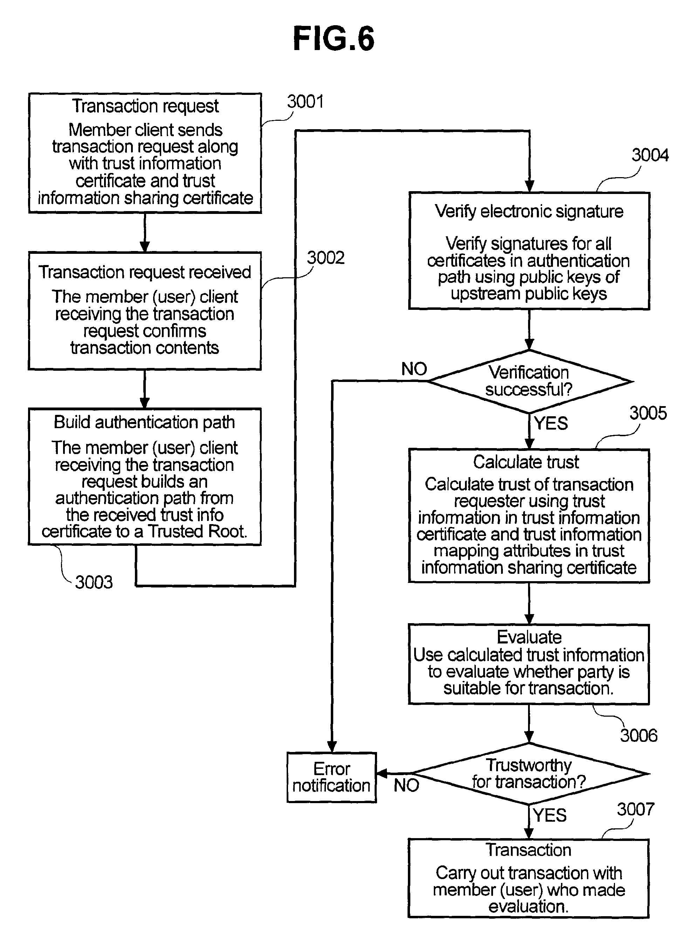

Fig. 6 is a simplified flowchart showing operations performed when a transaction takes place between a member client (a) 220 of community (A) 200 and a member client (b) 320 of community (B) 300 (as shown in Fig. 3) according to an embodiment of the present invention. The flowchart depicted in Fig. 6 is merely illustrative of an embodiment incorporating the present invention and does not limit the scope of the invention as recited in the claims. One of ordinary skill in the art would recognise other variations, modifications, and alternatives.

In the embodiment depicted in Fig. 6, member client (b) 320 initiates a transaction request requesting a transaction with a member client (a) 320 of community (A) 200. The transaction request is sent from member client (b) 320 to member client (a) 220 in community (A) 200 along with member client (b)'s own trust information certificate 150 and trust information sharing certificate 400 (step 3001). Member client (a) 220 receives the transaction request and confirms the transaction contents (step 3002). Then the following operations are performed in order to authenticate and evaluate the trustworthiness of member client (b) 320 making the request for the transaction.

First, an authentication path is generated from trust information certificate 150 of the member client (b) 320 being evaluated and sent to a Trusted Root which is trusted by member (user) client (a) 220, i.e., a certificate chain is set up as follows: trust information certificate 150 of member client (b) 320 → trust information sharing certificate 400 from community (B) → public key 124 of community (A) 200 (step 3003). Next, in order to check the legitimacy of the certificates in the authentication path, the public key is used to verify the digital signatures of each of the certificates upstream in the authentication path (step 3004). Upon successful verification, the trust of the member client (b) 320 is then calculated using trust information 153 included in the trust information certificate 150 and the trust information mapping attributes 403 included in trust information sharing certificate 400 (step 3005). According to an embodiment of the present invention, in step 3005, the trust information mapping attributes 403 are used to convert the trust information included in trust information certificate for member client (b) 320 from an evaluation standard used by community (B) 300 to an evaluation standard used by community (A) 200. Based upon the trust level calculated in step 3005, member client (b) 320 is evaluated to determine if it is a suitable transaction partner (step 3006). If member client (b) 320 is determined to be trustworthy and suitable for the transaction, the transaction is carried out between member client (a) 320 who requested the transaction and member client (a) 220 which performed the evaluation (step 3007).

In the embodiment described in Fig. 3 and Fig. 6, member (user) client (a) 220 of community (A) 200 evaluates the party requesting the transaction, i.e., member client (b) 320 of community (B) 300. However, it would also be possible for member client (b) 320 making the transaction request to evaluate the trust of member client (a) 220 of community (A) 200. By issuing in advance a trust information sharing certificate 400 that contains the trust information mapping attributes 403 and the public key 124 of the community server (A) 210 and that is signed with the secret key 115 of community server (B) 310, member client (b) 320 can evaluate the trust of member client (a) 220 of the community (A) for the transaction.

Furthermore, identity confirmation and prevention of transaction disavowals when a member client 120 carries out a transaction is made possible if, in community 100 shown in Fig. 2, community server 110 issues to each of the member clients 120 a certificate (public key certificate) containing public key information corresponding to the secret key held by each of the member clients 120. Alternatively, the trust information certificates 150 can include the public key information.

The present invention allows transactions to be carried out at multiple sites using trust information in a secure environment (i.e., guaranteeing legitimacy of trust information) using electronic certificates. The present invention provides a secure and smooth system where trust information can be shared with other sites without requiring sites to change existing member evaluation methods or standards and without altering the exclusive trust placed by a site in the public key of its community server (the Trusted Root relationship).

Another advantage of the present invention is that trust information obtained by members of one site can be used by the members at other sites without requiring trust information to be accumulated separately at the other sites. This significantly increases transaction opportunities. The provision of more attractive sites (communities) by having member (user) trust information shared back and forth between one site and the other sites, is a further benefit promising a greatly increased number of members (users).

It should be apparent that the above description describes only a specific embodiment of the present invention and does not limit the scope of the present invention as recited in the claims. Although specific embodiments of the invention have been described, various modifications, alterations, alternative constructions, and equivalents are also encompassed within the scope of the invention. The described invention is not restricted to operation within certain specific data processing environments, but is free to operate within a plurality of data processing environments. Additionally, although the present invention has been described using a particular series of transactions and steps, it should be apparent to those skilled in the art that the scope of the present invention is not limited to the described series of transactions and steps.

Further, while the present invention has been described using a particular combination of hardware and software, it should be recognised that other combinations of hardware and software are also within the scope of the present invention. The present invention may be implemented only in hardware or only in software or using combinations thereof. A software implementation of the present invention may be a program performing several functions. The program may be stored on a computer-readable medium.

The specification and drawings are, accordingly, to be regarded in an illustrative rather than a restrictive sense. It will, however, be evident that additions, subtractions, deletions, and other modifications and changes may be made thereunto without departing from the broader spirit and scope of the invention as set forth in the claims.

## Claims

1. A system for providing a trust information certificate to a user in a network environment, the system comprising:
a receiving module configured to access history information for the user, the history information identifying past actions of the user;
an evaluation module configured to generate trust information for the user based upon the history information, the trust information generated according to a first evaluation technique;
a first certificate issuing module configured to generate the trust information certificate for the user based upon the trust information generated for the user according to the first evaluation technique; and
a second certificate issuing module configured to generate a trust information sharing certificate comprising information for converting the trust information generated according to the first evaluation standard to trust information according to a second evaluation technique different from the first evaluation standard.

2. The system of claim 1 wherein the information for converting the trust information generated according to the first evaluation standard to trust information according to the second evaluation technique comprises a formula for performing the conversion.

3. A data processing system comprising:
a receiving module configured to receive a transaction request from a user requesting a transaction, the transaction request comprising a first certificate and a second certificate, the first certificate comprising trust information for the user generated according to a first evaluation standard, the second certificate comprising attribute information for converting the trust information generated according to the first evaluation standard to trust information according to a second evaluation standard different from the first evaluation standard; and
a conversion module configured to convert the trust information included in the first certificate to trust information according to the second evaluation standard by using the attribute information included in the second certificate.

4. The system of claim 3 comprising:
a transaction processing module configured to perform the requested transaction based upon the trust information according to the second evaluation standard.

5. An electronic commerce system comprising:
a first server configured to provide services for a first plurality of members, the first plurality of members including a first member;
a second server configured to provide services for a second plurality of members, the second plurality of members including a second member;
a first user system used by the first member; and
a second user system used by the second member;
wherein the first user system is configured to receive a transaction request from the second user system, the transaction request comprising a first certificate and a second certificate, the first certificate comprising trust information for the second member generated by the second server according to a second evaluation standard, the trust information generated based upon the second member's activities, the second certificate comprising attribute information for converting the trust information generated according to the second evaluation standard to trust information according to a first evaluation used by the first server, the first evaluation standard different from the second evaluation standard.

6. The system of claim 5 wherein the first user system is configured to covert the trust information included in the first certificate to trust information according to the first evaluation standard by using the attribute information included in the second certificate.

7. A memory for storing data for access by an application program being executed in a data processing system, comprising:
a first data structure stored in the memory, the first data structure used by the application program and comprising:
trust information for a user, the trust information generated according to a first evaluation procedure, the trust information indicating a certification level for the user for participating in commercial activities; and
a second data structure stored in the memory, the second data structure used by the application program and comprising:
attributes information for converting the trust information generated according to the first evaluation procedure to trust information according to a second evaluation procedure different from the first evaluation procedure.

8. In a network environment for conducting electronic commerce activities, a method of providing trust information for a user comprising:
accessing history information for the user, the history information identifying past actions of the user;
generating the trust information for the user according to a first evaluation method based upon the history information;
generating a trust information certificate for the user comprising the trust information generated for the user according to the first evaluation method; and
generating a trust information sharing certificate comprising information for converting the trust information generated according to the first evaluation method to trust information according to a second evaluation method different from the first evaluation standard.

9. The method of claim 8 wherein the information for converting the trust information generated according to the first evaluation standard to trust information generated according to the second evaluation technique comprises a formula for performing the conversion.

10. The method of claim 8 wherein generating the trust information sharing certificate comprises:
determining mapping information identifying the mapping between the first evaluation method and the second evaluation method; and
generating the information for converting the trust information generated according to the first evaluation method to trust information according to a second evaluation method based upon the mapping information.

11. In a network environment for conducting electronic commerce activities, a method of determining trust information for a user comprising:
receiving a transaction request from a user requesting a transaction, the transaction request comprising a first certificate and a second certificate, the first certificate comprising trust information for the user generated according to a first evaluation standard, the second certificate comprising attribute information for converting the trust information generated according to the first evaluation standard to trust information according to a second evaluation standard different from the first evaluation standard; and
converting the trust information included in the first certificate to trust information according to the second evaluation standard by using the attribute information included in the second certificate.

12. The method of claim 11 comprising performing the requested transaction based upon the trust information according to the second evaluation standard.

13. The method of claim 11 wherein:
the trust information for the user generated according to the first evaluation standard is expressed as a first quantitative value; and
converting the trust information comprises determining a second quantitative value corresponding to the first quantitative value, the second quantitative value expressing the trust information according to the second evaluation standard.

14. The method of claim 11 wherein:
the trust information for the user generated according to the first evaluation standard is expressed as a grade value; and
converting the trust information comprises determining a quantitative value corresponding to the grade value, the quantitative value expressing the trust information according to the second evaluation standard.

15. The method of claim 11 wherein:
the trust information for the user generated according to the first evaluation standard is expressed as a quantitative value; and
converting the trust information comprises determining a grade value corresponding to the quantitative value, the grade value expressing the trust information according to the second evaluation standard.

16. In an electronic commerce system comprising a first server configured to provide services for a first plurality of users including a first user using a first user system and a second server configured to provide services for a second plurality of users including a second user using a second user system, a method of processing a transaction request, the method comprising:
receiving a transaction request at the first user system from the second user system, the transaction request comprising a first certificate and a second certificate, the first certificate comprising trust information for the second member generated by the second server according to a second evaluation standard, the trust information generated based upon the second user's activities, the second certificate comprising attribute information for converting the trust information generated according to the second evaluation standard to trust information according to a first evaluation used by the first server, the first evaluation standard different from the second evaluation standard.

17. The method of claim 16 further comprising:
at the first user system, converting the trust information included in the first certificate to trust information according to the first evaluation standard by using the attribute information included in the second certificate.

18. A computer program product stored on a computer readable medium for facilitating electronic commerce transactions, the computer program product comprising:
code for accessing history information for a user, the history information identifying past actions of the user;
code for generating trust information for the user according to a first evaluation method based upon the history information;
code for generating a trust information certificate for the user comprising the trust information generated for the user according to the first evaluation method; and
code for generating a trust information sharing certificate comprising information for converting the trust information generated according to the first evaluation method to trust information according to a second evaluation method different from the first evaluation standard.

19. A computer program product stored on a computer readable medium for determining trust information for a user, the computer program product comprising:
code for receiving a transaction request from a user requesting a transaction, the transaction request comprising a first certificate and a second certificate, the first certificate comprising trust information for the user generated according to a first evaluation standard, the second certificate comprising attribute information for converting the trust information generated according to the first evaluation standard to trust information according to a second evaluation standard different from the first evaluation standard; and
code for converting the trust information included in the first certificate to trust information according to the second evaluation standard by using the attribute information included in the second certificate.

20. The computer program product of claim 19 further comprising code for performing the requested transaction based upon the trust information according to the second evaluation standard.
